# EUROPEAN PATENT SPECIFICATION

(11) **EP 1 897 795 B1**
(45) Date of publication and mention of the grant of the patent: **25.01.2012**
(21) Application number: 06018933.9
(22) Date of filing: 11.09.2006
(51) Int. Cl.: B60T 7/10, B62L 3/02

(54) **Hand brake for motorcycles**
Handbetätigte Feststellbremse für Motorräder
Frein à main pour motocyclette

(43) Date of publication of application: 12.03.2008
(73) Proprietor: Kwang Yang Motor Co., Ltd., Kaohsiung City (TW)
(72) Inventor: Chen, Yu-Kun, Cambridge CB2 1FD (GB)
(74) Representative: Horak, Michael

(56) References cited:
- EP-A2- 1 186 522
- CH-A- 360 604
- US-A- 4 356 876
- US-A- 4 534 439
- US-A1- 2002 020 589
- US-A1- 2005 139 433

## Description

### BACKGROUND OF THE INVENTION

### (a) Technical Field of the Invention

This invention is related to an improvement in the structure of a hand brake for motorcycles, and in particular to one which can be operated in a small space and easily installed and has an aesthetic outlook.

### (b) Description of the Prior Art

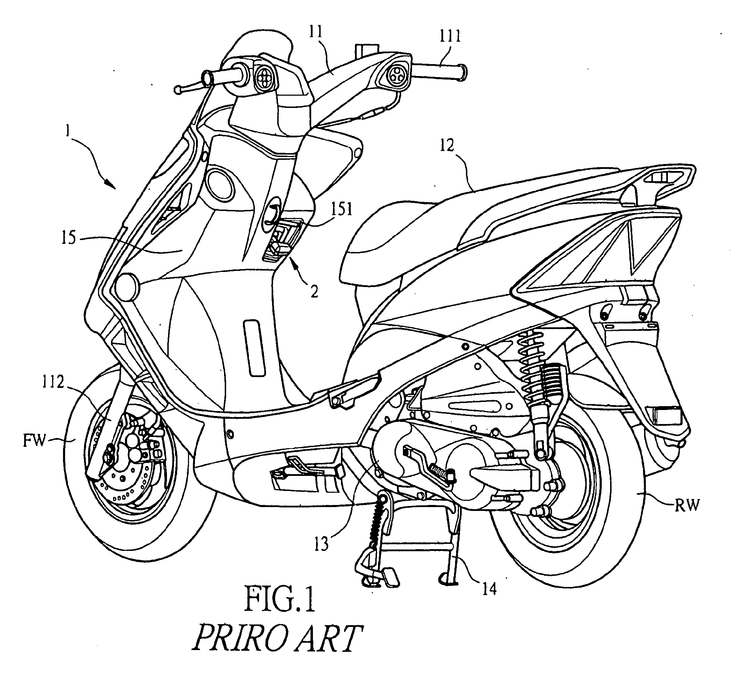

As shown in FIG 1, the conventional motorcycle 1 includes a steering mechanism 11, a seat 12, a power unit 13, a kick stand 14 and a body cover 15. The steering mechanism 11 is provided at the top with a pair of handles 111 for controlling the traveling direction. The lower portion of the steering mechanism 11 has a front fork 112 pivotally connected with a front wheel FW. The power unit 13 is mounted under the seat 12 and pivotally connected with a rear wheel RW. Under the power unit 13 is mounted the kick stand 14 to allow the motorcycle to be held upright. The body cover 15 is used for enclosing the other components to provide an appealing appearance for the motorcycle. The motorcycle makes use of the power unit 13 to drive the rear wheel RW thereby making the front wheel FW rotate synchronously and utilizes the steering mechanism 11 to control the traveling direction.

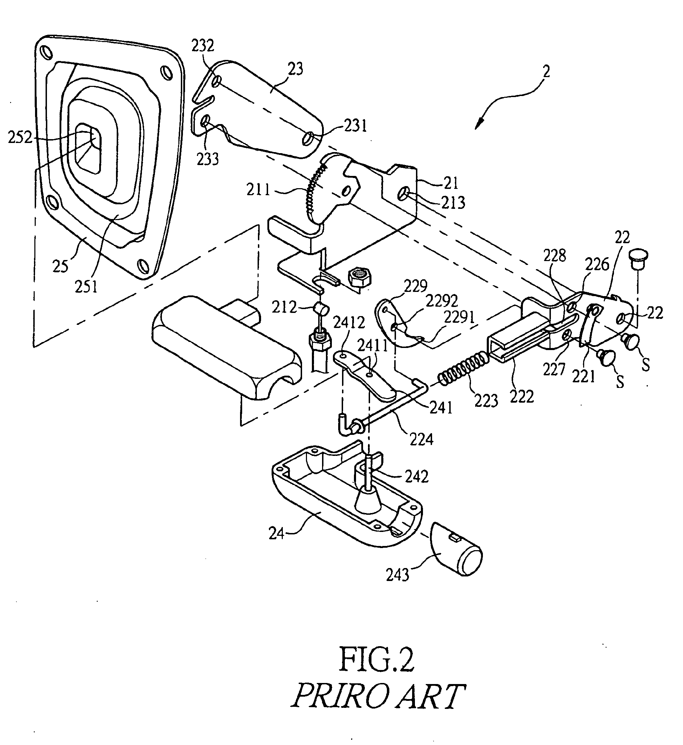

However, if the motorcycle 1 is a heavy motorcycle, a hand brake 2 is generally mounted on the motorcycle in order to make it easier to keep at a fixed position. As shown in FIG 2, the conventional hand brake 2 mainly includes a fixed seat 21, a first actuating member 22, a second actuating member 23, a handle 24 and a decorative cover 25.

The fixed seat 21 is mounted on the frame of the motorcycle 1 and provided with a plurality of teeth 211. The bottom of the fixed seat is connected with a brake cable 212 and a through hole 213.

The first actuating member 22 has a fixing plate 221 at one side and a hollow seat 222 at one end thereof. Within the hollow seat 222 are mounted a resilient member 223 and a linking lever 224 fitted in the resilient member 223. An end of the linking lever 224 extends out of a groove 228 of the first actuating member 22 to engage with a ratchet 229. The ratchet 229 has a pawl 2291 and a hole 2292 which is aligned with a hole 227 of the first actuating member 22. The body of the first actuating member 22 has a fixing hole 225 and a plurality of through holes 226 and 227. The fixing hole 225 is aligned with the hole 213 of the fixed seat 21.

The second actuating member 23 is a sheet member formed with a fixing hole 231 and a plurality of through holes 232 and 233. The fixing hole 231 is aligned with the hole 213 of the fixed seat 21. The through holes 232 and 233 are aligned with the through holes 226 and 227 of the first actuating member 22 and fastened together by screws S.

The handle 24 is mounted on the hollow seat 222 of the first actuating member 22. Within the handle 24 there is mounted a linking member 241 having an axial hole 2411 and a through hole 2412. The axial hole 2411 receives an axle 242 of the handle 24. The through hole 2412 of the linking member 241 is connected with an end of the linking lever 224. The upper end of the handle 24 is provided with a button 243 which is fitted in an end of the handle 24 and can be moved with respect to the handle 24.

The decorative cover 25 is made of soft rubber and provided with wrinkles 251. The decorative cover 25 has a center hole 252 for the passage of the hollow seat 222 and used for covering the other components within the hand brake 2.

Referring to FIGS. 3, 3A and 4, when the handle 24 of the hand brake 2 is pulled, the first and second actuating members 22 and 23 will be rotated. Then, the pawl 2291 of the ratchet 229 is engaged with the teeth 211 of the fixed seat 21 thereby tightening the brake cable 212 and therefore achieving the purpose of applying the brake. When desired to release the hand brake 2 of the motorcycle, the button 243 of the handle 24 is depressed to push the linking member 241 (see FIGS. 5, 5A and 6) thereby causing the linking member 241 to rotate with respect to the axle 242 and moving the linking lever 224. Then, the ratchet 229 will be rotated by the linking lever 224 thus disengaging the pawl 2291 of the ratchet 229 from the teeth 211 of the fixed seat 21. Then, the handle 24 is moved downwardly for an angle so that the brake cable 212 is no longer tightened thus releasing the hand brake.

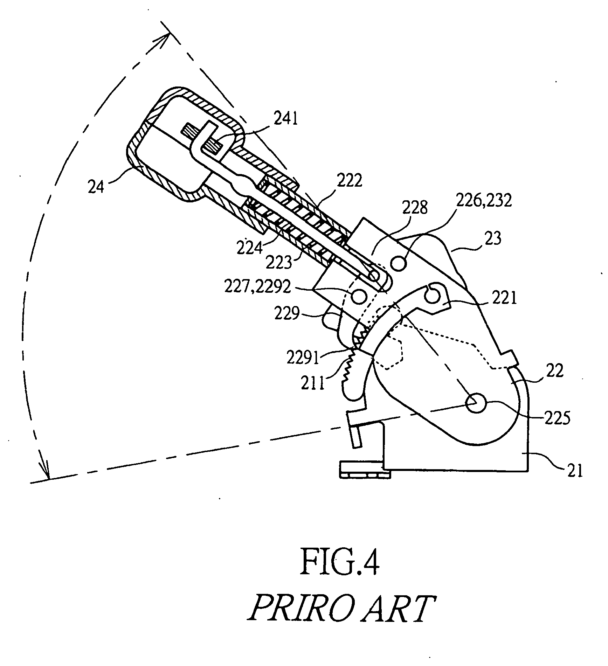

Although the hand brake 2 can achieve the purpose of keeping the heavy motorcycle 1 at a fixed position, the handle 24 must be almost on the same plane of the first actuating member 22 and the handle brake 2 must be operated by depressing the button 243 to drive the linking lever 224 which will in turn drive the ratchet 229. Hence, it is necessary to mount the hollow seat 222 at one end of the first actuating member 22 thereby requiring a relatively large space for the operation of the handle 24. As shown in FIG 4, the dotted lines illustrate the operation range of the handle 24 of the hand brake 2. In order to enable the hand brake 2 to operate normally, an elongated hole 151 must be formed on the body cover 15 and so it is necessary to install a decorative cover 25 on the elongated hole 151 to cover the other components of the hand brake 2. As a consequence, the conventional hand brake 2 is complicated in structure and difficult to install thus increasing its costs. Furthermore, when the pawl 2291 of the ratchet 229 engages with the teeth 221, the brake cable 212 will pull the pawl 2291 against the teeth 211. Accordingly, when desired to depress the button 243 to disengage the pawl 2291 from the teeth 211, it is necessary to apply a relatively large force for the operation. It will be difficult for one to use her/his fingers to apply such a relatively force thereby causing much inconvenience in operation.

EP-A2-1 186 522 disclose a layout structure of vehicular parking device. US 2003/020589 A1 discloses a parking lock device for three-wheeled vehicle. US-A-4 534 439 discloses a parking lock device for motor tricycles. US 2005/139433 A1 discloses a parking brake lever attaching structure for a saddle-type vehicle. US-A-4,356 876 discloses a parking apparatus for use on a three-wheeled motorized vehicle. CH 360 604 A discloses a braking structure for bicycles and motorcycles. However, all of the references suffer from the same drawbacks as the prior art shown in FIGS. 1-6, i.e. they all require a relatively large space for the operation of the handle and are too complicated in structure.

Therefore, it is an object of the present invention to provide an improvement in the structure of a hand brake for motorcycles which can be obviate and mitigate the above-mentioned drawbacks.

### SUMMARY OF THE INVENTION

It is the primary object of the present invention to provide a hand brake for a motorcycle which comprises: a fixed seat having a vertical wall provided with a plurality of teeth; a brake cable connected with a bottom of said fixed seat; a first actuating member provided with a fixing plate for fixing said brake cable and having a hole for the passage of a rivet; a second actuating member having a fixing hole and first and second through holes; a ratchet mounted between said first actuating member and said second actuating member and having an end provided with a pawl and a hole close to the pawl; a rivet extending through the hole of said first actuating member, the hole of the of said ratchet and the first through hole of said second actuating member to join them together, an axle having first end engaged with said first actuating member; and a handle having an end engaged with said axle and arranged in parallel with the first actuating member; characterized in that said vertical wall of said fixed seat has an upper edge provided with a first pushing point adjacent to said teeth and a second pushing point having a distance from said first pushing point, the axle having a first end extending through a key hole of said first actuating member, a hole of the fixed seat and the fixing hole of said second actuating member, the second through hole of said second actuating member is for the passage of a stud, a spring and a ball, said ratchet having a cavity at one side thereof and provided with a restoring spring, said handle being mounted on a second end of said axle so that said handle is mounted on one side of said first actuating member, and said handle and said first actuating member are installed on the same axle, the second end of the axle is provided with a plurality of external splines which are engaged with internal splines provided in a hole of the handle, and when the handle is pulled upwardly, the axle will drive the first and second actuating members to rotate and by means of the rivet joint of the first actuating member, second actuating member and ratchet, said rotation of the first and second actuating members (32, 33) causes a rotation of the ratchet.

The foregoing objects and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a perspective view of a motorcycle mounted with a prior art hand brake;
FIG 2 an exploded view of the prior art hand brake;

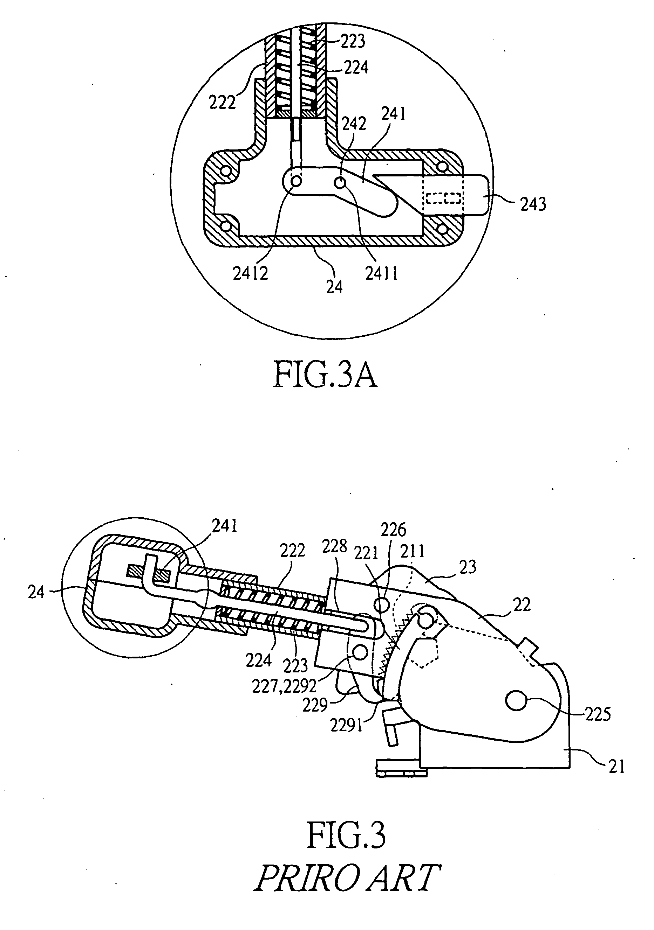

FIG 3 is a sectional view of the prior art hand brake;
FIG 3A is an enlarged view of a portion of FIG 3;
FIG 4 illustrates the operation of the prior art hand brake;

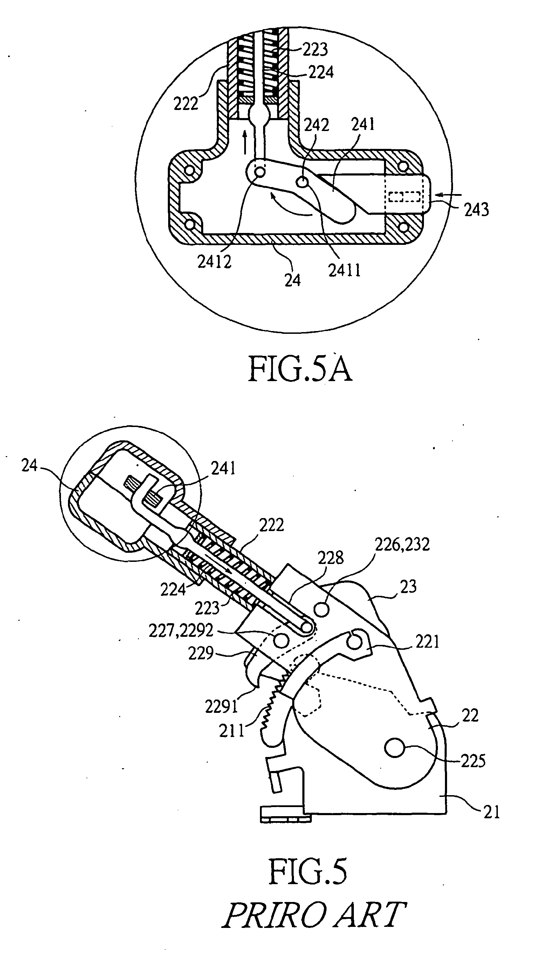

FIG 5 is a sectional view illustrating the release of the prior art hand brake;
FIG 5A is an enlarged view of a portion of FIG. 5;

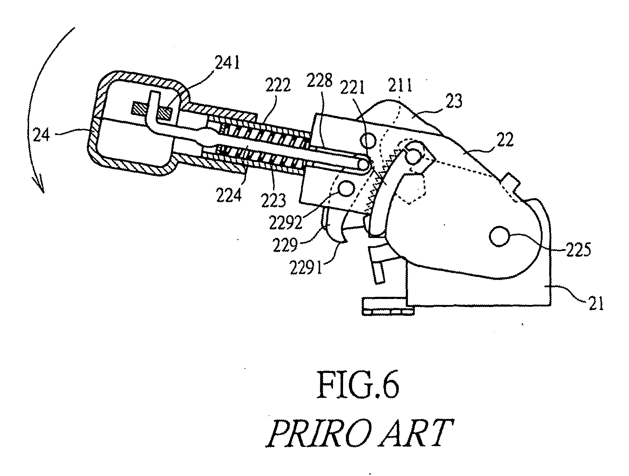

FIG 6 illustrates how the prior art hand brake is released and returned to its original position;

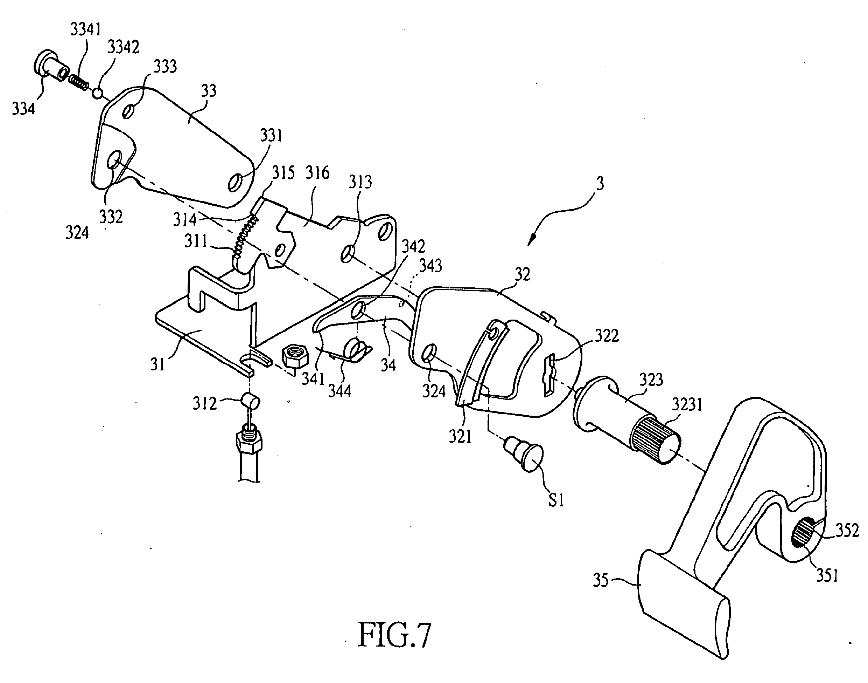

FIG 7 is an exploded view of a hand brake for motorcycles according to the present invention;

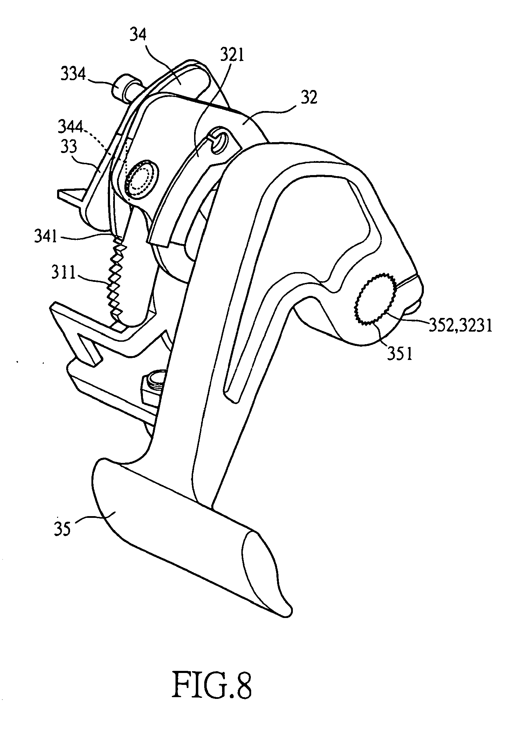

FIG 8 is a perspective view of the hand brake according to the present invention;

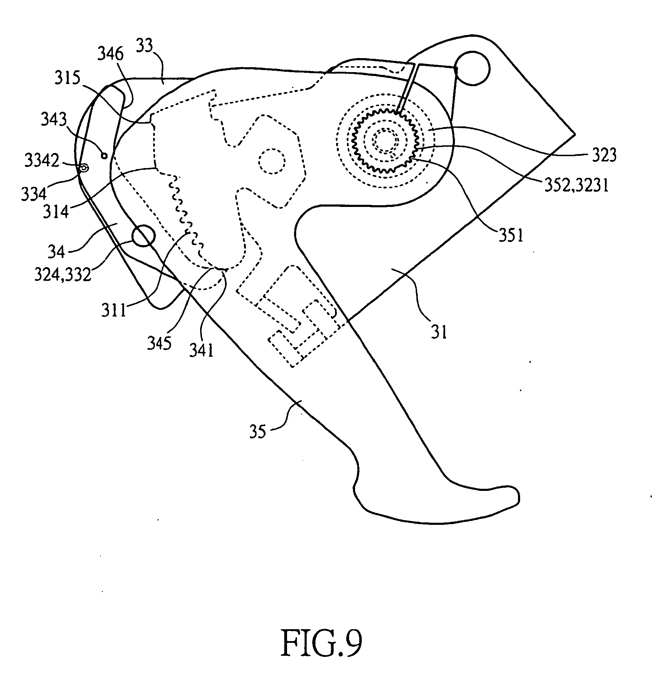

FIG 9 illustrates the normal condition of the hand brake according to the present invention;

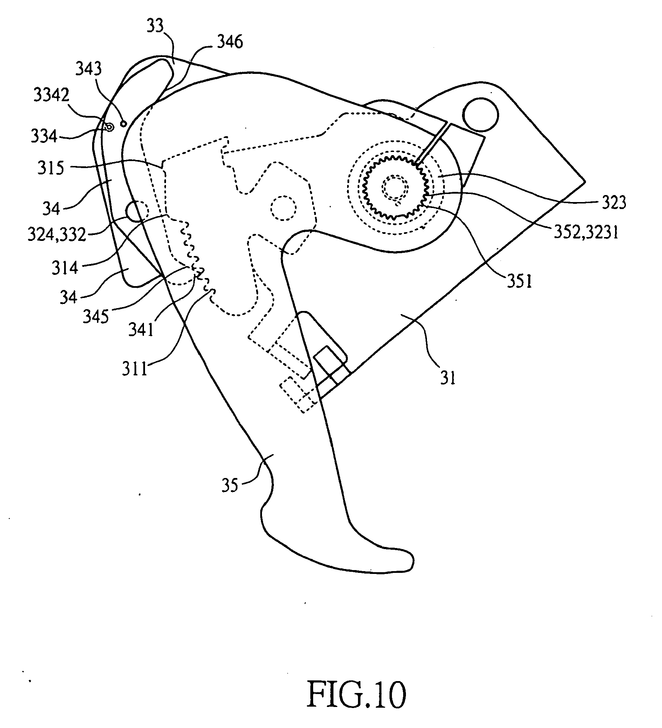

FIG 10 illustrates the working principle of the hand brake according to the present invention;

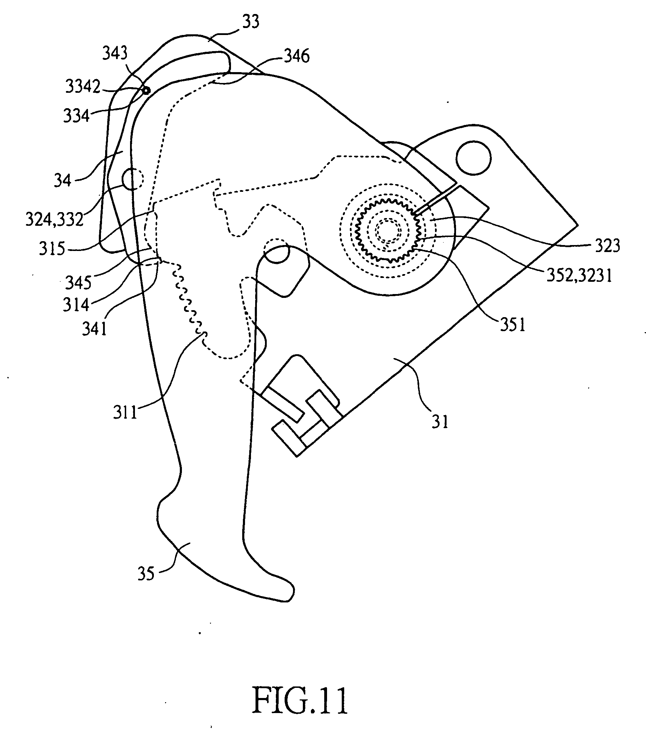

FIG 11 illustrates the hand brake according to the present invention being pulled to the highest position;

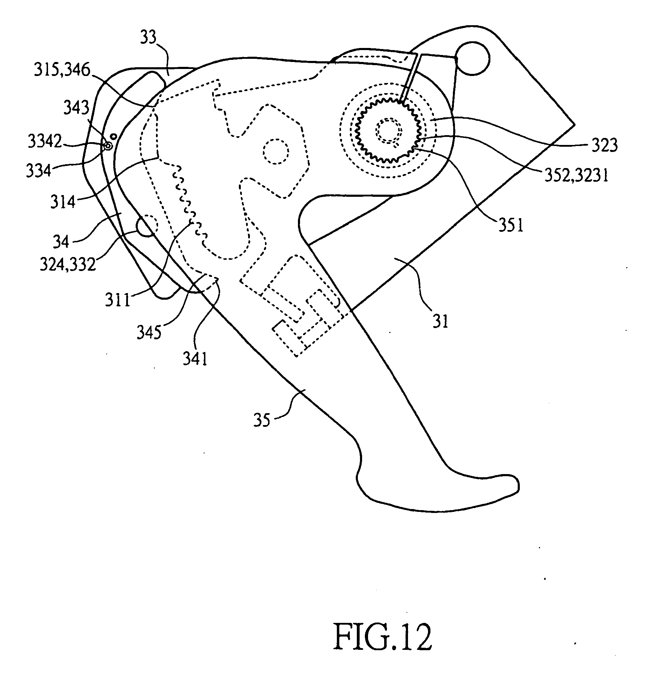

FIG 12 illustrates how the hand brake according to the present invention returns to its original position; and

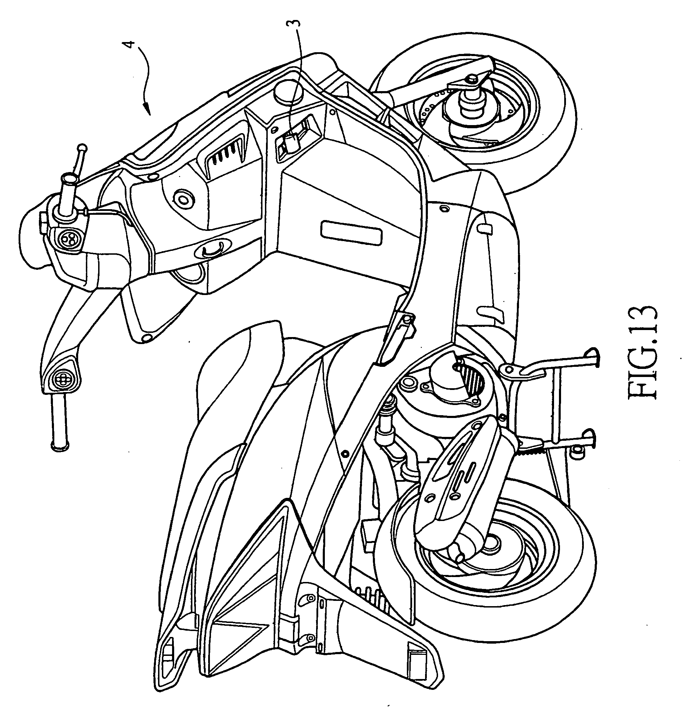

FIG 13 is a perspective view of a motorcycle mounted with a hand brake according to the present invention.

### DETAILED DESCRIPTION OF THE PREFERRED EMBODIMENT

The following descriptions are of exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

Referring to FIG 7, the hand brake 3 according to the present invention comprises a fixed seat 31, a first actuating member 32, a second actuating member 33, a ratchet 34 and a handle 35.

The fixed seat 31 is fastened on a frame of a motorcycle and has a vertical wall 316 provided with a plurality of teeth 311. The bottom of the fixed seat 31 is connected with a brake cable 312. The vertical wall 316 is formed with a hole 313. The vertical wall 316 has an upper edge provided with a first pushing point 314 adjacent to the teeth 311 and a second pushing point 315 having a distance from the first pushing point 314. The first and second pushing points 314 and 315 are corners or projections on the upper edge of the vertical wall 316.

The first actuating member 32 is provided at one side with a fixing plate 321 for fixing the brake cable 312. The first actuating member 32 has a key hole 322 for the passage of an end of an axle 323. The axle 323 is provided at one end with a plurality of external splines 3231. The first actuating member 32 has a hole 324 for the passage of a rivet S 1.

The second actuating member 33 is a plate having a fixing hole 331 and two through holes 332 and 333. The fixing hole 331 is aligned with the hole 313. The through hole 332 is in alignment with the hole 324 of the first actuating member 32. The through hole 333 is for the passage of a ball 3342, a spring 3341 and a stud 334.

The ratchet 34 is mounted between the first actuating member 32 and the second actuating member 33. The ratchet 34 has a pawl 341 and a hole 342 close to the pawl 341. The hole 342 is aligned with the hole 324 of the first actuating member 32 and the hole 332 of the second actuating member 33. The ratchet 34, the first actuating member 32 and the second actuating member 33 are joined together by the rivet S 1 extending through the holes 324, 342 and 332. The ratchet 34 has a cavity 343 at one side. The ratchet 34 is provided with a restoring spring 344. The inner side of the ratchet 34 has a first confining point 345 and a second confining point 346 (see FIG 9).

The handle 35 has a hole 351 provided with internal splines 352 engageable with the external splines 3231 of the axle 323.

When in assembly, an end of the axle 323 is inserted through the key hole 322 of the first actuating member 32, the hole 313 of the fixed seat 31, and the hole 331 of the second actuating member 33. The ratchet 34 is arranged between the first actuating member 32 and the second actuating member 33. The restoring spring 344 is mounted on the ratchet 34. The ratchet 34, the first actuating member 33 and the second actuating member 34 are joined together by the rivet S 1. Finally, the brake cable 312 is fastened to the fixed seat 31 and wound on the fixed plate 321 to form a hand brake 3 (see FIG 8).

Referring to FIGS. 7, 8, 9 and 10, when the handle 35 is pulled upwardly (see FIG 10), the axle 323 will drive the first and second actuating members 32 and 33 to rotate, the pawl 341 of the ratchet 34 will be engaged with the teeth 311 of the fixed seat 31 thereby tightening the brake cable 312 and therefore achieving the purpose of applying a brake. When desired to release the braking condition, it is only necessary to pull the handle 25 to the uppermost position (see FIGS. 11 and 12), so that the first confining point 345 of the ratchet 34 will be pushed by the first pushing point 314 of the fixed seat 31 thereby rotating the ratchet 34 to make the cavity 343 to align with the hole 333. In the meantime, the spring 3341 will force the ball 3342 into the cavity 343, and the pawl 341 of the ratchet 34 will be disengaged from the teeth 311 of the fixed seat 31. Then, the gravitational force of the handle 35 and the pulling force of the brake cable 312 will force the handle 35 to rotate downwardly As the handle 35 is rotated downwardly, the first actuating member 32 and the second actuating member 33 will be driven to rotate downwardly. Meanwhile, the second confining point 346 of the ratchet 34 will be pushed by the second pushing point 315 of the fixed seat 31 thereby making the ball 3342 disengage from the cavity 343 and therefore returning the ratchet 34 to the original position and releasing the hand brake 3.

The present invention is characterized by the first actuating member 32 having an axle 323 provided with external splines 3231 which are engaged with internal splines 352 of the handle 35 so that the handle 35 can be mounted on one side of the first actuating member 32 and installed on the same axle 323 thereby causing the handle 35 to be in parallel with the first actuating member 32. As a consequence, the space for the operation of the handle 35 in the frame body of the motorcycle can be reduced and the hand brake 3 can be easily installed. When the hand brake 3 is installed in the motorcycle 4, the motorcycle 4 will have a more beautiful outlook (see FIG 13). Furthermore, the second actuating member 33 is provided with a spring-loaded stud 334, so that when the handle 35 is pulled to the highest position, the ratchet 34 will be kept in place by the ball 3342 of the spring-loaded stud 334. When the ratchet 34 is disengaged from the teeth 311 of the fixed seat 31, the weight of the handle 35 and the pulling force of the brake cable 312 will force the handle 35 to rotate downwardly thereby pushing away the ratchet 34. Finally, the restoring spring 34 will push the ratchet 34 to the original position, thus achieving the purpose of enabling the motorcycle to be kept at a stationary position and the hand brake to be released conveniently.

The present invention is further characterized by the handle 35 which is an independent member so that the outlook of the handle 35 can be conveniently designed as desired in order to suit the whole appearance of the motorcycle 4 thus providing the motorcycle with a attractive appearance.

In conclusion, the hand brake according to the present invention not only achieves the above-mentioned functions, but also has a simple structure and lesser components. It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the claims of the present invention.

## Claims

1. A hand brake (3) for a motorcycle comprising:
a fixed seat (31) having a vertical wall (316) provided with a plurality of teeth (311);
a brake cable (312) connected with a bottom of said fixed seat (31);
a first actuating member (32) provided with a fixing plate (321) for fixing said brake cable (312) and having a hole (324) for the passage of a rivet (S1);
a second actuating member (33) being a plate having a fixing hole (331) and first and second through holes (332) and (333);
a ratchet (34) mounted between said first actuating member (32) and said second actuating member (33) and having an end provided with a pawl (341) and a hole (342) close to the pawl (341);
a rivet (S1) extending through the hole (324) of said first actuating member (32), the hole (342) of said ratchet (34) and the first through hole (332) of said second actuating member (33) to join them together;
an axle (323) having a first end engaged with said first actuating member (32); and
a handle (35) having an end engaged with said axle (323) and arranged in parallel with said first actuating member (32);
**characterized in that** said vertical wall (316) of said fixed seat has an upper edge provided with a first pushing point (314) adjacent to said teeth and a second pushing point (315) having a distance from said first pushing point (314), the axle (323) having a first end extending through a key hole (322) of said first actuating member (32), a hole (313) of the fixed seat (31) and the fixing hole (331) of said second actuating member (33), the second through hole (333) of said second actuating member (33) is for the passage of a stud (334), a spring (3341) and a ball (3342), said ratchet having a cavity (343) at one side thereof and provided with a restoring spring (344), said handle (35) being mounted on a second end of said axle (323) so that said handle (35) is mounted on one side of said first actuating member (32), and said handle and said first actuating member (32) are installed on the same axle (323), the second end of the axle (323) is provided with a plurality of external splines (3231) which are engaged with internal splines (352) provided in a hole (351) of the handle (35), and when the handle (35) is pulled upwardly, the axle (323) will drive the first and second actuating members (32, 33) to rotate and by means of the rivet joint of the first actuating member (32), second actuating member (33) and ratchet (34), said rotation of the first and second actuating members (32, 33) causes a rotation of the ratchet (34).

2. The hand brake (3) for a motorcycle as claimed in claim 1,
wherein said first pushing point (314) and said second pushing points (315) are corners or projections on said upper edge of said vertical wall.

3. The hand brake (3) for a motorcycle as claimed in claim 1,
wherein an inner side of said ratchet (34) has a first confining point (345) and a second confining point (346).

4. The hand brake (3) for a motorcycle as claimed in claim 1, wherein said ratchet (34) is pushed by a restoring spring (344).

## Patentansprüche

1. Eine Handbremse (3) für ein Motorrad mit:
Einem festen Aufsatz (31) mit einer vertikalen Wandung (316), welche mit einer Verzahnung (311) ausgestattet ist;
einem Bremszug (312), welcher an die Unterseite des besagten Aufsatzes (31) angeschlossen ist;
einer ersten Betätigungskomponente (32), welche mit einer Feststellplatte (321) für den besagten Bremszug (312) und einem Durchgangsloch (324) für die Fassung eines Hohlniets (S1) ausgestattet ist,
einer zweiten Betätigungskomponente (33), welche eine Platte mit einem Befestigungsloch (331) ist und ein erstes (332) und zweites (333) Durchgangloch und enthält;
eine Rastfeder (34), welche zwischen den besagten ersten (32) und zweiten (33) Betätigungskomponenten angebracht ist und an einem Ende eine Klinke (341) und ein Loch (342) für die Schließung der Klinke (341) aufweist;
einem Hohlniet (S1), welches sich durch das Durchgangsloch (324) von der ersten besagten Betätigungskomponente (32), dem Loch (342) der besagten Rastfeder (34) und dem ersten Durchgangsloch (332) der zweiten Betätigungskomponente (33) erstreckt, um diese zusammenzufügen;
eine Achse (323) mit einem ersten und verzahnt mit besagter ersten Betätigugskomponente (32); und
einem Handgriff (35) mit einem Ende mit besagter Achse (323) verzahnt und
parallel zu der ersten besagten Betätigungskomponente (32) angeordnet;
definiert in der besagten vertikalen Wand (316) des besagten fixen Aufsatzes befindet sich eine obere Kante, mit einem ersten Druckpunkt (314) neben der besagten Verzahnung und einem zweiten Druckpunkt (315),welcher in einem Abstand zu besagtem ersten (314) eingelassen ist, die Achse (323) mit einer ersten Betätigungskomponente (32), einem Loch (313) im fixen Aufsatz (31) und
einem Feststellloch (333) für die besagte zweite Betätigungskomponente (33),
welches als Durchgang für einen Stutzen (334), eine Feder (3341) und eine Kugel (3342) ausgestattet ist, die besagte Rastfeder verfügt über eine Aushöhlung (343) an einer ihrer Seiten und eine Wiederherstellfeder (344), besagter Griff (35) ist auf das zweite Ende der besagten Achse (323) aufgesetzt und besagter Griff und
besagte erste Betätigungskomponente (32) sind auf der selben Achse (323) installiert, das zweite Ende der Achse (323) ist mit einer Veilzahl an Keilen (3231) ausgestattet, welche in interne Keile (352), die in einem Loch (351) des Griffes (35) vorgerichtet sind greifen, und wenn der Griff (35) nach oben gedrückt wird, wird die Achse (323) die erste und zweite Betätigungskomponenten (32, 33) durch den Hohlnietscharnier der ersten (32) und zweiten (33) Betätigungskomponente sowie der Rastfeder (34) in Rotation versetzen, besagte Rotation der ersten und zweiten Betätigungskompontente (32, 33) bewirken eine Drehung der Rastfeder (34).

2. Die Handbremse (3) für ein Motorrad wie in Anspruch 1 angegeben, wobei der besagte erste Druckpunkt (314) und die besagten zweiten Druckpunkte (315) Ecken oder Auskragungen an der besagten oberen Kante der besagten vertikalen Wandung sind.

3. Die Handbremse (3) für ein Motorrad wie in Anspruch 1 angegeben, wobei die innere Seite besagter Rastfeder (34) über einen ersten (345) und zweiten Begrenzungspunkt (346) verfügt.

4. Die Handbremse (3) für ein Motorrad wie in Anspruch 1 angegeben, wobei die besagte Rastfeder (34) durch eine Wiederherstellfeder (344) gedrückt wird.

## Revendications

1. Frein à main (3) pour une motocyclette comprenant :
un siège fixé (31) ayant un mur vertical (316) muni d'une pluralité de dents (311) ;
un câble de frein (312) connecté avec un fond de le siège fixé précité (31);
un premier mécanisme d'actionnement (32) muni d'une plaque de fixation (321) pour fixer le câble de frein précité (312) et ayant un trou (324) pour le passage d'un rivet (S1).
un deuxième mécanisme d'actionnement (33) étant une plaque ayant un trou de fixation (331) et premier et deuxième trous de passage (332) et (333) ;
un rochet (34) monté entre le premier mécanisme d'actionnement précité (32) et le deuxième membre d'actionnement précité (33) et ayant un bout muni d'un cliquet (341) et un trou (342) près du cliquet (341);
un rivet (S1) s'étendant à traverse le trou (324) du premier mécanisme d'actionnement (32), le trou (342) du rochet précité (34) et premier trou passant (332) du deuxième mécanisme d'actionnement (33) pour les joindre ;
un essieu (323) ayant un premier bout engagé avec le premier mécanisme d'actionnement précité (32) ; et
une poignée (35) ayant un bout engagé avec l'essieu précité (323) et
arrangé en parallèle avec le premier mécanisme d'actionnement précité (32) ;
**caractérisé en ce que** le mur vertical précité (316) du siège fixé précité a un bord supérieur muni d'un premier point poussant (314) adjacent aux dents précités et un deuxième point poussant (315) ayant une distance du premier point poussant (314), l'essieu (323) ayant un premier bout s'étendant à travers un trou de clé (322) du premier mécanisme d'actionnement (32), un trou (313) du siège fixé (31) et le trou de fixation (331) du deuxième mécanisme d'actionnement précité (33), le deuxième trou passant (333) du deuxième mécanisme d'actionnement précité (33) est pour le passage d'un clou (334), un ressort (3341) et une balle (3342), le rochet précité ayant une cavité (343) sur un côté et muni d'un ressort de rappel (344), la poignée précitée (35) étant montée sur un deuxième bout de l'essieu précité (323), donc la poignée précitée (35) est monté sur un côté du premier mécanisme d'actionnement précité (32), et la poignée précitée et le premier mécanisme d'actionnement précité (32) sont installés sur le même essieu (323), le deuxième bout de l'essieu (323) est muni d'une pluralité de cannelures extérieures (3231) qui sont engagées avec les cannelures intérieures (3 52) fournies dans un trou (351) de la poignée (35), et lorsque la poignée (35) est tirée vers le haut, l'essieu (323) conduira le premier et deuxième mécanismes d'actionnement (32, 33) pour se tourner et à l'aide de joint de rivet du premier mécanisme d'actionnement (32), du deuxième mécanisme d'actionnement (33) et
du rochet (34), la rotation précitée du premier mécanisme d'actionnement (32) et du deuxième (33) cause une rotation du rochet (34).

2. Frein à main (3) pour une motocyclette selon la revendication 1, **caractérisé en ce que** le premier point poussant (314) et les points poussant précités (315) sont coins ou projections sur le bord supérieur précité du mur vertical précité.

3. Frein à main (3) pour une motocyclette selon la revendication 1, **caractérisé en ce qu'**un côté intérieur du rochet précité (34) ayant un premier point de confinement(345) et un deuxième point de confinement (346).

4. Frein à main (3) pour une motocyclette selon la revendication 1, **caractérisé en ce que** le rochet (34) est poussé par un ressort de rappel (344).
